(19) **Europäisches Patentamt**

**European Patent Office**

**Office européen des brevets**

(11) **EP 0 807 877 B2**

(12) **NEUE EUROPÄISCHE PATENTSCHRIFT**

(45) Veröffentlichungstag und Bekanntmachung des Hinweises auf die Entscheidung über den Einspruch:
**13.12.2006 Patentblatt 2006/50**

(51) Int Cl.:
***G05D 25/02*** *(2006.01)*

(45) Hinweis auf die Patenterteilung:
**31.10.2001 Patentblatt 2001/44**

(21) Anmeldenummer: **97106662.6**

(22) Anmeldetag: **22.04.1997**

(54) **System zum Steuern der Helligkeit eines Raumes**

System for controlling the brightness of a space

Système pour contrôler la luminosité d'un espace

(84) Benannte Vertragsstaaten:
**AT BE CH DE DK ES FI FR GB IT LI NL SE**

(30) Priorität: **13.05.1996 DE 19619281**

(43) Veröffentlichungstag der Anmeldung:
**19.11.1997 Patentblatt 1997/47**

(73) Patentinhaber: **Zumtobel Lighting GmbH**
**6850 Dornbirn (AT)**

(72) Erfinder:
 • **Geiginger, Joachim**
  **6845 Hohenems (AT)**
 • **Jahn, Gerhard**
  **6911 Lochau (AT)**
 • **Heim, Armin, Dr.**
  **6900 Bregenz (AT)**

(74) Vertreter: **Schmidt-Evers, Jürgen et al**
**Patentanwälte Mitscherlich & Partner,**
**Sonnenstrasse 33**
**80331 München (DE)**

(56) Entgegenhaltungen:
| | |
|---|---|
| **EP-A- 0 521 818** | **EP-A- 0 563 696** |
| **EP-A- 0 603 936** | **EP-A- 0 652 690** |
| **DE-A- 2 452 230** | **DE-A- 3 931 945** |
| **DE-A- 7 222 914** | **GB-A- 2 293 443** |
| **JP-A- 7 085 976** | **US-A- 4 695 769** |
| **US-A- 4 772 825** | **US-A- 5 010 459** |
| **US-A- 5 061 997** | |

 • **Beschwerdeschriftsatz:"Slide desolve control"; Wells, Peter F.; Practical Electronics, 07/84, Band 20, Nr. 7, Seite 30-32**

EP 0 807 877 B2

**Beschreibung**

Die Erfindung betrifft ein System und eine Steuereinrichtung, sowie eine Anwendung des Systems zum Steuern der Helligkeit eines Raumes, dermit mehreren Lichtquellen oder mehreren Gruppen von Lichtquellen beleuchtet ist.

Neuere Beleuchtungssysteme arbeiten mit mehreren unterschiedlichen Lichtquellen, insbesondere mit direkten und indirekten Lichtquellen. Früher konnten die Lichtquellen, wie zum Beispiel Lampen oder Leuchten, nur unabhängig voneinander gedimmt oder geschaltet werden. Dadurch war es nicht oder nur sehr schwer möglich, beispielsweise das Verhältnis zwischen direktem und indirektem Licht zu verändern und gleichzeitig die Gesamthelligkeit konstant zu halten.

In der Praxis ist bereits ein Lichtmanagementsystem der Anmelderin bekannt, welches in Form einer "intelligenten" Lichtsteuerung verschiedene Lichtstimmungen in einem Raum individuell gestalten kann und dabei die jeweilige Tageslichteinstrahlung mit berücksichtigt. Dieses System ist beispielsweise in dem Fachartikel "Lichtmanagement bringt zahlreiche Vorteile" von C. Tropp in etz, Bd. 113,1992, Heft 2, S. 84-87 und in dem Fachartikel "Integriertes Lichtmanagement bringt optimalen Energieeinsatz" in Licht, Heft 7-8 / 1995, S. 578-580 beschrieben.

Mit dem bekannten Lichtmanagementsystem der Anmelderin kann der Benutzer über eine Infrarot-Fernbedienung oder ein Bediengerät einzelne Leuchten und Leuchtengruppen ansteuern, ein- und ausschalten sowie dimmen, d.h. seine individuellen Lichtstimmungen gestalten. Über Tastendruck sind mehrere abgespeicherte Lichtstimmungen entsprechend unterschiedlichen Bürotätigkeiten abrufbar. Die Informationsübertragung zu den einzelnen Leuchten und Leuchtengruppen übernimmt ein Bus-System mit moderner Zweidraht-Steuertechnologie.

Weiter offenbart die EP-A-0 603 936 ein System zum Steuern der Helligkeit eines Raumes gemäß dem Oberbegriff von Patentanspruch 1. Mit diesem System ist das Verhältnis der einzelnen Lichtquellen in dem Raum einstellbar. Das System weist eine mit den Betriebsgeräten der verschiedenen Lichtquellen verbundene Steuereinrichtung zum Steuern der Leistungsaufnahme der einzelnen Lichtquellen auf.

Ein weiteres System zum Steuern der Helligkeit eines Raumes ist in der GB-A-2,293,443 beschrieben. Das in dieser Druckschrift offenbarte System enthält mehrere Beleuchtungseinheiten mit jeweils mehreren Lichtquellen für die Beleuchtung einer Flugzeug-Passagierkabine. Jede der Beleuchtungseinheiten ist mit einer durch eine Steuereinrichtung ansteuerbare Dimm- und Schaltvorrichtung verbunden. Mittels der Steuereinrichtung werden die einzelnen Dimm- und Schaltvorrichtungen der Beleuchtungseinheiten derart angesteuert, daß verschiedene vorprogrammierte Kombinationen von Beleuchtungsstärken der Beleuchtungseinheiten in der Flugzeug-Passagierkabine eingestellt werden können.

Die EP-A-0 521 818 offenbart ebenfalls ein System zum Steuern der Helligkeit eines Raumes. Das System enthält eine Steuereinrichtung mit mehreren Bedienelementen zum Einstellen der Gesamthelligkeit des Raumes und Verändern der Lichtstärken der einzelnen in dem Raum vorhandenen Lichtquellen.

Aufgabe der vorliegenden Erfindung ist es, ein System zum Steuern der Helligkeit eines Raumes mit einer Erweiterung der Einstellmöglichkeiten durch den Benutzer zu schaffen, welches eine Kopplung der verschiedenen Lichtquellen oder Gruppen von Lichtquellen im Raum ermöglicht, so daß die Lichtstärken der einzelnen Lichtquellen oder Gruppen von Lichtquellen gemäß den Einstellungen eines Nutzers aufeinander abgestimmt steuerbar sind, d.h. daß der Nutzer nur Parameter des gesamten Systems einstellen muß, nicht aber die Parameter jeder einzelnen Lichtquelle.

Diese Aufgabe wird durch ein System zum Steuern der Helligkeit eines Raumes mit den Merkmalen des Patentanspruchs 1 gelöst.

Gemäß der vorliegenden Erfindung ist die Steuereinrichtung mit allen Betriebsgeräten der verschiedenen Lichtquellen im Raum verbunden ist, um die Leistungsaufnahme der einzelnen Lichtquellen zu steuern, und weist mindestens zwei Bedienelemente zum Einstellen der Gesamthelligkeit (Parameter "Volume") und des Verhältnisses der Lichtstärken (Parameter "Balance") auf, wobei der Benutzer mittels der Bedienelemente entweder die Gesamthelligkeit des Raumes bei konstantem Verhältnis der Lichtstärken der einzelnen Lichtquellen oder Gruppen von Lichtquellen oder das Verhältnis der Lichtstärken bei konstanter Gesamthelligkeit verändern kann.

Eine mögliche Anwendung des erfingsgemäßen Systems existiert beim Einsatz in einer Leuchte mit wenigstens zwei getrennt ansteuerbaren Leuchtmitteln, wobei ein Leuchtmittel zur direkten und ein weiteres Leuchtmittel zur indirekten Raumbeleuchtung dient.

Weiterbildungen und weitere Ausgestaltungen der Erfindung sind den Unteransprüchen zu entnehmen.

Anhand der Zeichnungen werden nun Aufbau und Funktionsweise eines Ausführungsbeispiels der Erfindung erklärt. Es zeigen:

Fig. 1    eine schematische Darstellung eines Ausführungsbeispiels des erfindungsgemäßen Systems;

Fig. 2    ein Blockschaltbild eines vereinfachten Systems nach Fig. 1;

Fig. 3    zwei Diagramme zur Erklärung des logischen Zusammenhanges zwischen den Stellwerten der Steuereinrichtung und der Helligkeit

Fig. 4    zwei Diagramme zur Erklärung der Funktionsweise des erfindungsgemäßen Systems; und

Fig. 5    ein Flußdiagramm zur Erklärung der Funktionsweise des erfindungsgemäßen Systems.

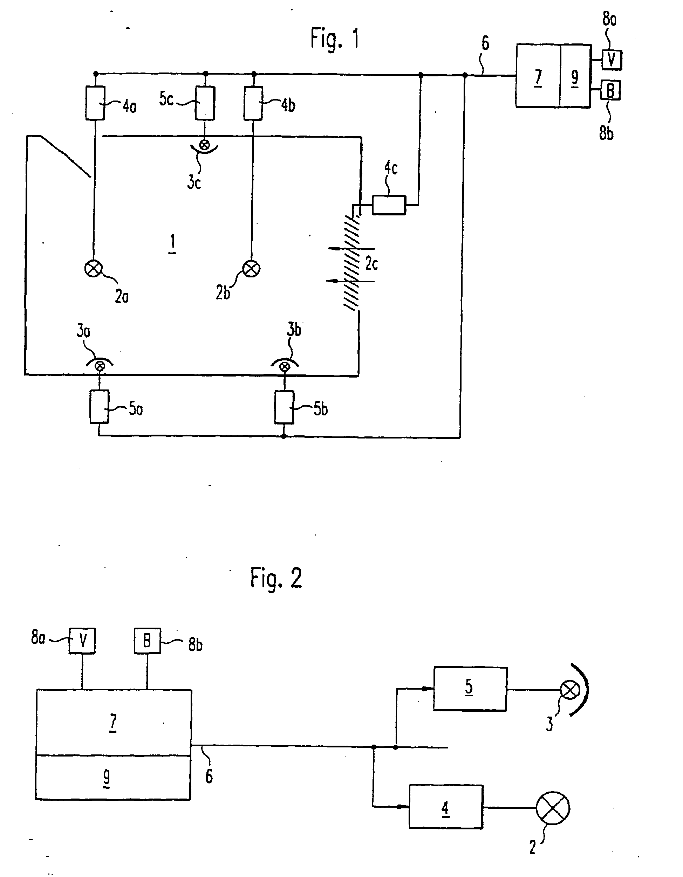

In Fig. 1 ist ein Ausführungsbeispiel des erfindungsgemäßen.Systems schematisch dargestellt. In einem zu beleuchtenden Raum 1 befinden sich mehrere Gruppen von Lichtquellen; eine erste Gruppe wird aus zwei direkten Lichtquellen 2a und 2b in Form von handelsüblichen Deckenlampen gebildet, die zweite Gruppe besteht aus der direkten Lichtquelle 2c in Form von durch ein Fenster des Raumes 1 eintretenden Tageslichts, dessen Lichtstärke beispielsweise durch verstellbare Lamellenjalousien eingestellt werden kann, und die dritte Gruppe besteht aus drei indirekt strahlenden Lichtquellen 3a, 3b und 3c in Form von indirekt strahlenden Wandlampen. Anstelle der in diesem Ausführungsbeispiel verwendeten Lichtquellen sind prinzipiell alle denkbaren Arten von Lichtquellen möglich, deren Lichtstärke veränderbar ist.

Die direkten Lichtquellen 2a und 2b sind mit den zugehörigen Betriebsgeräten 4a bzw. 4b verbunden, die Lamellenjalousie zur Regelung des einfallenden Tageslichts ist mit dem zugehörigen Betriebsgerät 4c verbunden, und die indirekten Lichtquellen 3a, 3b und 3c sind mit den zugehörigen Betriebsgeräten 5a, 5b bzw. 5c verbunden. Alle eben erwähnten Betriebsgeräte 4a,... und 5a,... der verschiedenen Lichtquellen im Raum 1 sind über einen Bus 6 mit einer Steuereinrichtung 7 verbunden. Diese Steuereinrichtung 7 steuert über den Bus 6 die Leistungsaufnahme der einzelnen Betriebsgeräte 4a,... und 5a, ... und somit die Lichtstärken der einzelnen Lichtquellen 2a,... und 3a,... im Raum 1.

An der Steuereinrichtung 7 befinden sich zwei Bedienelemente 8a und 8b. Diese Bedienelemente 8a und 8b dienen dem Nutzer des Systems zum Einstellen bzw. Verändern des Parameters "Volume", d.h. der Gesamthelligkeit des Raumes 1 bzw. des Parameters "Balance", d.h. des Verhältnisses der Lichtstärken der direkten und der indirekten Lichtquellen.

Als Bedienelemente 8a und 8b können beispielsweise bekannte Doppeltaster zum Einstellen von Heller und Dunkler und zum Ein- und Ausschalten bzw. bekannte Drehgrifftasterzum Einstellen des Verhältnisses der Lichtstärken eingesetzt werden. Anstelle der eben erwähnten konventionellen Installationstechnik (Taster, Potentiometer, etc.) kann das Einstellen oder Verändern der Parameter auch durch Übertragung digitaler Daten zur Steuereinrichtung erfolgen.

Die Bedienelemente 8a und 8b müssen nicht notwendigerweise direkt an der Steuereinrichtung 7 angebracht sein, sondern können sich ebenso gut an einer externen Bedieneinheit befinden, die über eine elektrische Verbindung oder über Funksignale mit der Steuereinrichtung 7 verbunden ist zur Übermittlung der eingestellten Werte "Volume" und "Balance".

In Fig. 1 ist auch zu erkennen, daß die Steuereinrichtung einen nichtflüchtigen Speicher 9 aufweist, in dem sämtliche Konfigurationen gespeichert werden können. Zu diesen Konfigurationen gehören auch die voreingestellten Parameter, die neben den über die Bedienelemente 8a und 8b eingestellten Parametern Volume bzw. Balance zur Steuerung der Lichtstärken benötigt werden. Diese voreingestellten Parameter können u.a. sein: die Augenempfindlichkeit des Menschen, die Abhängigkeit der Lichtstärke von der auf die Lichtquelle aufgeprägten Leistung, die lichttechnischen Eigenschaften der Leuchte oder die Reflexionseigenschaften des zu beleuchtenden Raumes. Die Verwendung dieser voreingestellten Parameter wird weiter unten erklärt.

Fig. 2 zeigt als Blockschaltbild eine vereinfachte Darstellung des oben beschriebenen Systems. Anstelle der sechs Betriebsgeräte 4a, ... und 5a, ... aus Fig. 1 sind hier nur zwei Betriebsgeräte 4 und 5 an den Bus 6 der Steuereinrichtung 7 angeschlossen. Die Lichtstärke der direkten Lichtquelle 2 des Betriebsgerätes 4 wird über Kanal 1 der Steuereinrichtung 7 gesteuert und die Lichtstärke der indirekten Lichtquelle 3 des Betriebsgerätes 5 wird über Kanal 2 der Steuereinrichtung 7 gesteuert.

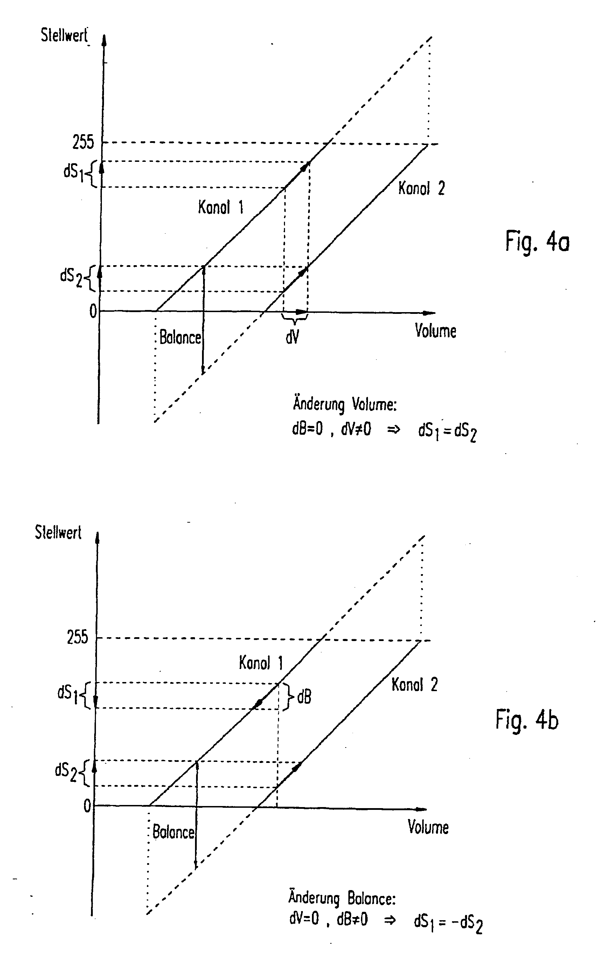

Über die Kanäle 1 und 2 werden von der Steuereinrichtung 7 die entsprechenden Stellwerte $S_1$ und $S_2$ für die Leistungsaufnahmen den Betriebsgeräten 4 bzw. 5 zugeführt. In Fig. 4a und Fig. 4b sind diese Stellwerte $S_1$ und $S_2$ für Kanal 1 bzw. Kanal 2 als Funktion des Parameters Volume, d.h. der Gesamthelligkeit in logarithmischer Darstellung in einem Diagramm aufgetragen.

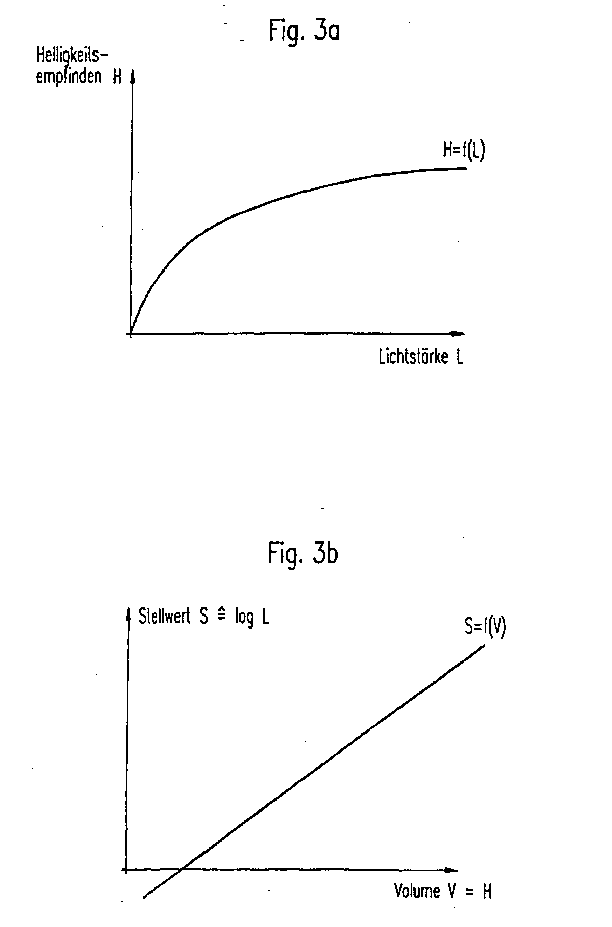

Der logische Zusammenhang zwischen den Stellwerten und der Helligkeit, der zu den angegebenen Stellwert-Kennlinien von Kanal 1 und Kanal 2 führt, wird im folgenden anhand von Fig. 3 erläutert. In dem Diagramm von Fig. 3a ist das Helligkeitsempfinden H des menschlichen Auges über der Lichtstärke L einer Lichtquelle aufgetragen. Das menschliche Auge empfindet den Helligkeitsunterschied zwischen zwei lichtschwachen Lichtquellen größer als den Helligkeitsunterschied zwischen zwei lichtstarken Lichtquellen. Es ergibt sich ein logarithmischer Zusammenhang zwischen H und L.

Wählt man statt der linearen Achsenskalierung von L eine logarithmische Auftragung über L, so ergibt sich im Diagramm eine Gerade als Zusammenhang zwischen H und L. In Fig. 3b sind nun die beiden Achsen vertauscht, d.h. das Helligkeitsempfinden H ist als Abszisse des Koordinatensystems und die Lichtstärke ist mit logarithmischer Skalierung als Ordinate des Koordinatensystems aufgetragen. Der Parameter Volume V der Steuereinrichtung 7 entspricht dem Helligkeitsempfinden H und der Stellwert S entspricht dem Logarithmus der Lichtstärke L. Somit ergibt sich für die Kennlinie des Stellwertes S über dem Parameter Volume V eine Gerade, die im allgemeinen keine Ursprungsgerade ist.

In den Diagrammen von Fig. 4a und Fig. 4b sind nun für die beiden Kanäle 1 und 2 die jeweiligen Stellwert-Kennlinien der Stellwerte $S_1$ bzw. $S_2$ eingetragen.Der Abstand der beiden parallelen Kennlinien des Stellwertes $S_1$ von Kanal 1 und des Stellwertes $S_2$ von Kanal 2 wird durch den Parameter Balance bestimmt, d.h. durch das Verhältnis der Lichtstärken der beiden Lichtquellen 2 und 3.

Die Wertebereiche für die beiden Stellwerte $S_1$ und $S_2$ liegen zwischen 0 und 255, der Wertebereich des Parameters Volume liegt zwischen 0 und 255 und der Wertebereich des Parameters Balance zwischen -255 und 255.

In Fig. 4a ist nun gezeigt, was passiert, wenn der Nutzer über das Bedienelement 8a den Parameter Volume ändert. Bei der Änderung des Parameters Volume werden die Lichtstärken beider Kanäle in die gleiche Richtung geändert, dabei darf sich für den Nutzer das Verhältnis der Lichtstärken nicht ändern. Dies ist wegen der logarithmischen Kennlinie genau dann der Fall, wenn die Stellwertdifferenz ($S_1$ - $S_2$) zwischen den beiden Kanälen konstant ist. Bei einer Änderung des Parameters Volume um dV ändern sich die beiden Stellwerte betragsgleich in die gleiche Richtung um $dS_1$ bzw, $dS_2$.

In Fig. 4b ist der Fall dargestellt, in dem der Nutzer über das Bedienelement 8b den Parameter Balance ändert. Bei der Änderung des Parameters Balance soll der eine Kanal genau um den Lichtstärkewert abnehmen, um den der andere Kanal zunimmt, wobei sich für den Nutzer die Gesamthelligkeit nicht ändern darf. Dies ist wegen der logarithmischen Kennlinie genau dann der Fall, wenn der Stellwert des einen Kanals um den Wert abnimmt, um den der des anderen Kanals vergrößert wird. Bei einer Änderung des Parameters Balance um dB ändern sich die beiden Stellwerte also betragsgleich in entgegengesetzter Richtung um $dS_1$ bzw. $dS_2 = - dS_1$.

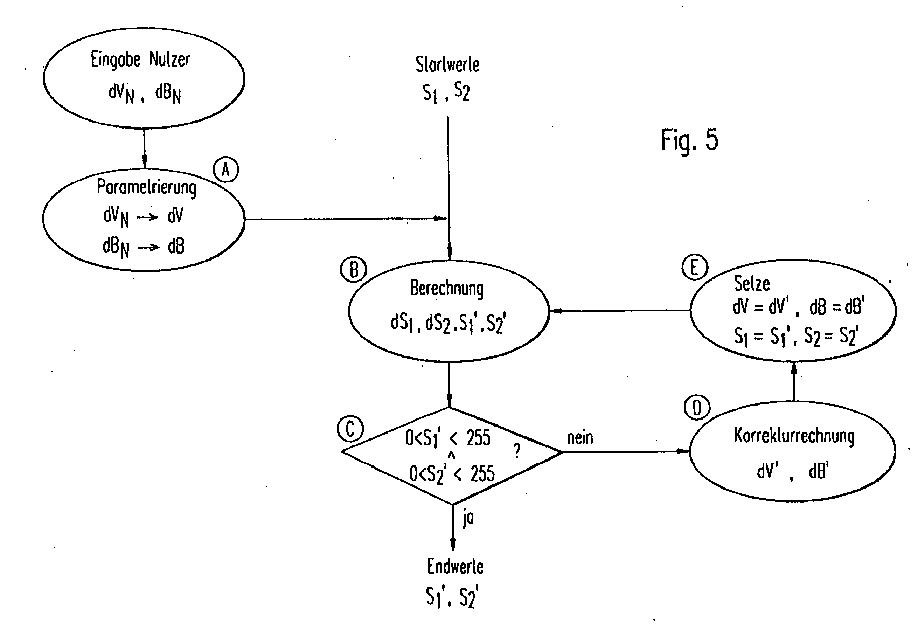

Die genaue Berechnung der Änderung der Stellwerte $dS_1$ und $dS_2$ bei Änderung der Parameter um dV bzw. dB wird im folgenden anhand von Fig. 5 erklärt. Dabei zeigt Fig. 5 ein Flußdiagramm zur Berechnung der neuen Stellwerte $S'_1$ und $S'_2$ aufgrund von Parameteränderungen $dV_N$ und $dB_N$ durch den Nutzer. Die Berechnung enthält folgende Schritte:

A) Parametrierung der vom Nutzer eingegeben Änderungen $dV_N$ und $dB_N$ durch eine nichtlineare Koordinatentransformation unter Verwendung der oben genannten voreingestellten Parameter, um für die Berechnung der Stellwerte $S'_1$ und $S'_2$ geeignete Parameteränderungen dV und dB zu erhalten:

$$\begin{pmatrix} dV \\ dB \end{pmatrix} = \mathcal{P} * \begin{pmatrix} dV_N \\ dB_N \end{pmatrix} \tag{1}$$

wobei P eine Matrix ist, die die voreingestellten Parameter berücksichtigt.

B) Berechnung der Änderungen der Stellwerte $dS_1$ und $dS_2$ aufgrund der parametrierten Änderungen dV und dB:

$$dS_1 = dV - dB \qquad und \qquad dS_2 = dV + dB \, , \tag{2}$$

und Berechnung der neuen Stellwerte $S'_1$ und $S'_2$:

$$S'_1 = S_1 + dS_1 \qquad und \qquad S'_2 = S_2 + dS_2 \, . \tag{3}$$

C) Überprüfung, ob die beiden Stellwerte $S'_1$ und $S'_2$ im erlaubten Wertebereich zwischen 0 und 255 liegen. Wenn dies der Fall ist, so können die soeben berechneten Stellwerte $S'_1$ und $S'_2$ als neue Stellwerte des Systems übernommen werden. Liegt zumindest einer der beiden Stellwerte $S'_1$ oder $S'_2$ außerhalb des gültigen Wertebereiches zwischen 0 und 255, so muß eine Korrekturrechnung gemäß Schritt D) erfolgen.

D) Korrekturrechnung, um den Stellwert $S'_i$ (i = 1 oder2), der sich außerhalb des gültigen Wertebereiches zwischen 0 und 255 befindet, auf einen Wert innerhalb dieses Wertebereiches zu setzen:

$$dV' = -(S'_i - D)/2 \qquad und \qquad dB' = + (S'_i - D) / 2, \tag{4}$$

wobei D den Wert einer oberen bzw. unteren Dimmgrenze darstellt, die im Betrieb der Lichtquellen nicht über- bzw. unterschritten werden soll. Dieser Wert D kann auch die Grenzwerte des Wertebereiches 0 und 255 annehmen, darf aber nicht außerhalb des Wertebereiches zwischen 0 und 255 liegen. Insbesondere im Fall der unteren Dimmgrenze wählt man oft einen Wert D > 0, wie weiter unten erklärt wird.

E) Wenn eine Korrekturrechnung nach Schritt D) durchgeführt wurde, so werden nun die Parameter wieder so gesetzt, daß wieder mit Schritt B) weiter gerechnet werden kann:

$$dV = dV', dB = dB', S_1 = S'_1, S_2 = S'_2 . \hspace{2cm} (5)$$

Die Korrekturrechnung (4) in Schritt D) ist so konzipiert, daß die Schleife aus den Schritten D) und E) nur einmal durchlaufen werden muß, dh. daß sich die Stellwerte $S'_1$ und $S'_2$ nach höchstens einer Korrektur Innerhalb des gültigen Wertebereiches befinden.

Um die oben beschriebene Berechnung der neuen Stellwerte $S'_1$ und $S'_2$ ,insbesondere im Fall einer Korrekturrechnung zu verdeutlichen, wird diese Berechnung nun anhand eines konkreten Zahlenbeispiels durchgeführt.

Als Stellwerte für die Kanäle 1 und 2 seien die Startwerte $S_1 = 210$ bzw. $S_2 = 120$ gewählt; die obere Dimmgrenze stimme mit der oberen Grenze des Wertebereiches überein, also D = 255. Die vom Nutzer eingegebenen Änderungen seien nach Durchführung der Parametrierung (Schritt A) gemäß Gleichung (1) dV = + 80 und dB = 0, d. h. der Nutzer möchte bei gleichbleibendem Verhältnis der Lichtstärken (dB = 0) die Gesamthelligkeit des Raumes (1) erhöhen (dV > 0).

Die Änderungen der Stellwerte ergeben sich gemäß Gleichung (2) in Schritt B) zu

$$dS_1 = + 80 - 0 = + 80 \hspace{1cm} und \hspace{1cm} dS_2 = + 80 + 0 = + 80.$$

Daraus werden gemäß Gleichung (3) die Werte der neuen Stellwerte berechnet:

$$S'_1 = 210 + 80 = 290 \hspace{1cm} und \hspace{1cm} S'_2 = 120 + 80 = 200.$$

Die Überprüfung der beiden Stellwerte $S'_1$ und $S'_2$ in Schritt C) ergibt, daß der ertse Stellwert $S'_1$ außerhalb des gültigen Wertebereiches liegt ($S'_1 > 255$). Die eben berechneten Stellwerte $S'_1$ und $S'_2$ können also nicht als neue Stellwerte übernommen werden, es muß eine Korrekturrechnung nach Schritt D) durchgeführt werden.

Die korrigierten Änderungen dV' und dB' ergeben sich gemäß Gleichung (4) zu

$$dV' = - (290 - 255) / 2 = - 17,5 \hspace{1cm} und \hspace{1cm} dB' = + (290 - 255) / 2 = + 17,5.$$

Nun werden in Schritt E) die berechneten Stellwerte $S'_1$ und $S'_2$ und die korrigierten Änderungen dV' und dB' als Startwerte gesetzt und wieder Schritt B) zugeführt, um die neuen, gültigen Stellwerte zu berechnen. Die Berechnung gemäß den Gleichungen (3) und (4) ergibt nun:

$$dS_1 = - 17,5 - (+ 17,5) = - 35 \hspace{1cm} und \hspace{1cm} dS_2 = - 17,5 - (- 17,5) = 0,$$

$$S'_1 = 290 + (- 35) = 255 \hspace{1cm} und \hspace{1cm} S'_2 = 200 + 0 = 200.$$

Der neue Stellwert $S'_1$ liegt nun innerhalb des gültigen Wertebereiches, so daß die zuletzt berechneten Stellwerte $S'_1$=255 und $S'_2$=200 jetzt über die beiden Kanäle 1 bzw. 2 den zugehörigen Betriebsgeräten 4 bzw. 5 zugeführt werden können.

Die Werte der unteren und oberen Dimmgrenze D werden während der Produktion im nichtflüchtigen Speicher 9 konfiguriert. Aufgrund der Wahl der unteren Dimmgrenze als D > 0 oder als D = 0 hat man die Möglichkeit, die Art des Ein- und Ausschaltens vorzubestimmen.

**EP 0 807 877 B2**

Im ersten Fall D > 0 werden die Lichtquellen der beiden Kanäle gemeinsam eingeschaltet und gemeinsam ausgeschaltet. Dies bedeutet, daß jener Kanal mit dem niedrigeren Stellwert auf der unteren Dimmgrenze stehen bleibt und erst dann auf Stellwert 0 geht, wenn sich auch für den anderen Kanal der Stellwert 0 ergibt, und daß jener Kanal mit dem niedrigeren Stellwert beim Einschalten des anderen Kanals auf die untere Dimmgrenze gesetzt wird, und nicht ausgeschaltet bleibt.

Im anderen Fall D = 0 werden die Lichtquellen im allgemeinen, d.h. außerwenn B=0 ist, getrennt voneinander ein- und ausgeschaltet. Dies bedeutet, daß jener Kanal mit dem niedrigeren Stellwert ausgeschaltet wird, wenn sich für diesen Stellwert 0 ergibt, während der andere Kanal mit größerem Stellwert eingeschaltet bleibt, und daß jener Kanal mit dem niedrigeren Stellwert beim Einschalten des anderen Kanals ausgeschaltet bleibt bis sich auch für diesen Kanal ein Stellwert größer 0 ergibt.

Eine weitere Anwendungsmöglichkeit neben dem in den Figuren 1 und 2 gezeigten Anwendungsbeispiel des erfindungsgemäßen Systems besteht in dem Einsatz des Systems bzw. der Steuereinrichtung in einer Leuchte mit wenigstens zwei getrennt ansteuerbaren Leuchtmitteln. Zumindest ein Leuchtmittel dient dabei der direkten Raumbeleuchtung und zumindest ein weiteres Leuchtmittel dient dabei der indirekten Raumbeleuchtung, so daß der Benutzer über die Bedienung der Steuereinrichtung der Leuchte analog zur Raumbeleuchtung gemäß der Figur 1 sowohl die Gesamthelligkeit des Raumes als auch das Verhältnis der Lichtstärken der direkten und indirekten Beleuchtung einstellen kann.

**Patentansprüche**

1. System zum Steuern der Helligkeit eines Raumes (1), der mit mehreren Lichtquellen (2a..., 3a...) oder mehreren Gruppen von Lichtquellen beleuchtet ist, wobei das Verhältnis der Lichtstärken der einzelnen Lichtquellen oder Gruppen von Lichtquellen einstellbar bzw. veränderbar ist, mit einer Steuereinrichtung (7), die mit allen Betriebsgeräten (4a..., 5a...) der verschiedenen Lichtquellen (2a..., 3a...) verbunden ist, um die Leistungsaufnahme der einzelnen Lichtquellen (2a..., 3a...) zu steuern, sowie mit einem ersten Bedienelement (8a) für die Steuereinrichtung (7), mittels dem die Gesamthelligkeit (Parameter "Volume") des Raumes (1) bei konstantem Verhältnis der Lichtstärken der einzelnen Lichtquellen oder Gruppen von Lichtquellen veränderbar ist,
**gekennzeichnet durch**
ein zweites Bedienelement (8b) für die Steuereinrichtung (7), mittels dem das Verhältnis der Lichtstärken (Parameter "Balance") der einzelnen Lichtquellen oder Gruppen von Lichtquellen bei konstanter Gesamthelligkeit veränderbar ist.

2. System nach Anspruch 1,
**dadurch gekennzeichnet,**
**daß** die Steuereinrichtung (7) aus den von einem Nutzer über die Bedienelemente (8a, 8b) eingestellten bzw. veränderten Parametern Stellwerte für die Betriebgeräte (4a..., 5a...) unter Berücksichtigung von voreingestellten Parametern des Systems berechnet, um die Leistungsaufnahme der Betriebsgeräte (4a..., 5a...) zu steuern.

3. System nach Anspruch 1 oder 2,
**dadurch gekennzeichnet,**
**daß** sich die Bedienelemente (8a, 8b) direkt an der Steuereinrichtung (7) oder an einer externen Bedieneinheit befinden, die mit der Steuereinrichtung (7) über elektrische Verbindung oder Funksignale verbunden ist.

4. System nach einem der vorhergehenden Ansprüche,
**dadurch gekennzeichnet,**
**daß** die Bedienelemente (8a, 8b) als konventionelle Bedienelemente (Taster, Potentiometer, etc.) und/oder als digitale Eingabeelemente zur Übertragung digitaler Daten an die Steuereinrichtung (7) ausgebildet sind.

5. System nach einem der vorhergehende Ansprüche,
**dadurch gekennzeichnet,**
**daß** die Steuereinrichtung (7) einen nichtflüchtigen Speicher (9) aufweist zum dauerhaften Speichern von voreingestellten Parametern und Konfigurationen.

6. System nach Anspruch 5,
**dadurch gekennzeichnet,**
**daß** die Steuereinrichtung (7) auf gemeinsames oder getrenntes Ein- und Ausschalten der einzelnen Lichtquellen (2a..., 3a...) konfigurierbar ist.

6

**7.** System nach einem der vorhergehenden Ansprüche,
**dadurch gekennzeichnet,**
**daß** die Steuereinrichtung (7) über einen Bus mit den Betriebsgeräten (4a..., 5a...) der Lichtquellen (2a..., 3a...) verbunden ist zur Steuerung der Betriebsgeräte (4a..., 5a...).

**8.** System nach einem der Ansprüche 2 bis 7,
**dadurch gekennzeichnet,**
**daß** die Steuereinrichtung (7) für jede Lichtquelle (2a..., 3a...) oder Gruppe von Lichtquellen einen Kanal aufweist, der den berechneten Stellwert des zugehörigen Betriebsgerätes (4a..., 5a...) diesem Betriebsgerät (4a..., 5a...) zuführt.

**9.** System nach einem der Ansprüche 2 bis 8,
**dadurch gekennzeichnet,**
**daß** die Berechnung der Stellwerte für die Betriebsgeräte (4a..., 5a...) den logarithmischen Zusammenhang zwischen dem Helliglaeitsempfinden des menschlichen Auges und den Lichtstärken der Lichtquellen (2a..., 3a...) berücksichtigt.

**10.** System nach einem der vorhergehenden Ansprüche,
**dadurch gekennzeichnet,**
**daß** mit dem System nicht nur künstliche Lichtquellen (2a..., 3a...), sondern auch in einen Raum (1) einfallendes Tageslicht, dessen Lichtstärke über Raumverdunklungseinrichtungen regelbar ist, steuerbar ist.

**11.** System nach einem der vorhergehenden Ansprüche,
**dadurch gekennzeichnet,**
**daß** die Steuereinrichtung (7) zusammen mit den Betriebsgeräten (4a..., 5a...) in einem Gehäuse integrierbar ist.

**12.** System nach einem der vorhergehenden Ansprüche,
**dadurch gekennzeichnet,**
**daß** die Steuereinrichtung (7) und/oder die Betriebsgeräte (4a..., 5a...) in die Lichtquellen (2a..., 3a...) integrierbar sind.

**13.** Anwendung eines Systems gemäß einem der Ansprüche 1 bis 12 in einer Leuchte mit wenigstens zwei getrennt ansteuerbaren Leuchtmitteln.

**14.** Anwendung nach Anspruch 13,
**dadurch gekennzeichnet,**
**daß** wenigstens ein Leuchtmittel der Leuchte zur direkten Beleuchtung eines Raumes (1) und wenigstens ein weiteres Leuchtmittel zur indirekten Beleuchtung eines Raumes (1) dient.

**Claims**

**1.** System for controlling the brightness of a room (1) which is illuminated with a plurality of light sources (2a..., 3a...) or a plurality of groups of light sources, the relationship of the light intensities of the individual light sources or groups of light sources being settable or alterable, having a control device (7) which is connected with all operating apparatuses (4a..., 5a...) of the various light sources (2a..., 3a...) in order to control the power take-up of the individual light sources (2a..., 3a...), and having a first operating element (8a) for the control device (7) by means of which the overall brightness (parameter "Volume") of the room (1) is alterable with constant relationship of the light intensities of the individual light sources or groups of light sources,
**characterised by**
a second operating element (8a, 8b) for the control device (7) by means of which the relationship of the light intensities (parameter "Balance") of the individual light sources or groups of light sources is alterable with constant overall brightness.

**2.** System according to claim 1,
**characterised in that**,
the control device (7), in order to control the power take-up of the operating apparatuses (4a..., 5a...), calculates setting values for the operating apparatuses (4a..., 5a...), taking into account preset parameters of the system, from the parameters set or altered by a user via the operating elements (8a, 8b).

3. System according to claim 1 or 2,
   **characterised in that**,
   the operating elements (8a, 8b) are located directly at the control device (7) or at an external operating unit which is connected with the control device (7) via electrical connection or radio signals.

4. System according to any preceding claim,
   **characterised in that**,
   the operating elements (8a, 8b) are provided as conventional operating elements (buttons, potentiometers, etc.) and/or as digital input elements for the transfer of digital data to the control device (7).

5. System according to any preceding claim,
   **characterised in that**,
   the control device (7) has a non-volatile memory (9) for the permanent storage of preset parameters and configurations.

6. System according to claim 5,
   **characterised in that**,
   the control device (7) can be configured for common or separate switching on and switching off of the individual light sources (2a..., 3a...).

7. System according to any preceding claim,
   **characterised in that**,
   the control device (7) is connected via a bus with the operating apparatuses (4a..., 5a...) of the light sources (2a..., 3a...) for the control of the operating apparatuses (4a..., 5a...).

8. System according to any of claims 2 to 7,
   **characterised in that**,
   the control device (7) has a channel for each light source (2a..., 3a...) or group of light sources, which channel delivers the calculated setting value of the associated operating apparatus (4a..., 5a...) to this operating apparatus (4a..., 5a...).

9. System according to any of claims 2 to 8,
   **characterised in that**,
   the calculation of the setting values for the operating apparatuses (4a..., 5a...) takes into consideration the logarithmic relationship between the light sensitivity of the human eye and the light intensities of the light sources (2a..., 3a...).

10. System according to any preceding claim,
    **characterised in that**,
    there is controllable with the system not only artificial light sources (2a..., 3a...) but also natural light incident in a room (1), the light intensity of which is regulatable by means of room darkening devices.

11. System according to any preceding claim,
    **characterised in that**,
    the control device (7) can be integrated in one housing together with the operating apparatuses (4a..., 5a...).

12. System according to any preceding claim,
    **characterised in that**,
    the control device (7) and/or the operating apparatuses (4a..., 5a...) can be integrated into the light sources (2a..., 3a...).

13. Use of a system in accordance with any of claims 1 to 12 in a light fitting having at least two separately controllable lighting means.

14. Use according to claim 13,
    **characterised in that**,
    at least one lighting means of the light fitting serves for the direct illumination of a room (1) and at least one further lighting means serves for the indirect illumination of a room (1).

**Revendications**

1.  Système pour régler la luminosité d'une pièce (1), qui est éclairée par plusieurs sources de lumière (2a..., 3a...) ou plusieurs groupes de sources de lumière, le rapport des intensités lumineuses des différentes sources de lumière ou groupes de sources de lumière étant réglable ou modifiable, avec un dispositif de commande (7), qui est relié à tous les appareils de fonctionnement (4a..., 5a...) des différentes sources de lumière (2a..., 3a...), de manière à commander l'absorption de puissance des différentes sources de lumière (2a..., 3a...), ainsi qu'avec un premier élément de d'actionnement (8a) pour le dispositif de commande (7), au moyen duquel la luminosité d'ensemble (paramètre « volume ») de la pièce (1) peut être modifiée pour un rapport constant des intensités lumineuses des différentes sources de lumière ou groupes de sources de lumière, **caractérisé par** un deuxième élément d'actionnement (8b) pour le dispositif de commande (7), au moyen duquel le rapport des intensités lumineuses (paramètre « balance ») des différentes sources de lumière ou des groupes de sources de lumière peut être modifié pour une luminosité d'ensemble constante.

2.  Système selon la revendication 1, **caractérisé en ce que** sur la base des paramètres réglés ou modifiés par un utilisateur au moyen des éléments d'actionnement (8a, 8b), le dispositif de commande (7) calcule des valeurs de réglage pour les appareils de fonctionnement (4a..., 5a...) en tenant compte de paramètres préréglés du système pour commander l'absorption de puissance des appareils de fonctionnement (4a..., 5a...).

3.  Système selon la revendication 1 ou 2, **caractérisé en ce que** les éléments d'actionnement (8a, 8b) sont situés directement sur le dispositif de commande (7) ou sur une unité d'actionnement externe, qui est reliée au dispositif de commande (7) par l'intermédiaire d'une liaison électrique ou de signaux radio.

4.  Système selon l'une des revendications précédentes, **caractérisé en ce que** les éléments d'actionnement (8a, 8b) sont réalisés sous la forme d'éléments d'actionnement classiques (touches, potentiomètres, etc.) et/ou sous la forme d'éléments d'entrée numériques pour la transmission de données numériques au dispositif de commande (7).

5.  Système selon l'une des revendications précédentes, **caractérisé en ce que** le dispositif de commande (7) comporte une mémoire non volatile (9) servant à mémoriser de façon permanente des paramètres préréglés et des configurations préréglées.

6.  Système selon la revendication 5, **caractérisé en ce que** le dispositif de commande (7) peut être configuré pour un allumage et une extinction communs ou séparés des différentes sources de lumière (2a..., 3a...).

7.  Système selon l'une des revendications précédentes, **caractérisé en ce que** le dispositif de commande (7) est relié par l'intermédiaire d'un bus aux appareils de fonctionnement (4a..., 5a...) des sources de lumière (2a..., 3a...) pour la commande des appareils de fonctionnement (4a..., 5a...).

8.  Système selon l'une des revendications 2 à 7, **caractérisé en ce que** le dispositif de commande (7) pour chaque source de lumière (2a..., 3a...) ou pour chaque groupe de sources de lumière comporte un canal, qui envoie la valeur de réglage calculée de l'appareil de fonctionnement associé (4a..., 5a...) à cet appareil de fonctionnement (4a...,5a...).

9.  Système selon l'une des revendications 2 à 8, **caractérisé en ce que** le calcul des valeurs de réglage pour les appareils de fonctionnement (4a..., 5a...) prend en compte la relation logarithmique entre la sensibilité de l'oeil humain à la luminosité et les intensités lumineuses des sources de lumière (2a..., 3a...).

10. Système selon l'une des revendications précédentes, **caractérisé en ce qu'**avec le système, on peut commander non seulement des sources de lumière artificielle (2a..., 3a...) mais également la lumière du jour entrant dans une pièce (1) et dont l'intensité est réglable au moyen de dispositifs d'assombrissement de la pièce.

11. Système selon l'une des revendications précédentes, **caractérisé en ce que** le dispositif de commande (7) peut être intégré conjointement avec les appareils de fonctionnement (4a..., 5a...) dans un boîtier.

12. Système selon l'une des revendications précédentes, **caractérisé en ce que** le dispositif de commande (7) et/ou les appareils de fonctionnement (4a..., 5a...) peuvent être intégrés dans les sources de lumière (2a..., 3a...).

13. Utilisation d'un système selon l'une des revendications 1 à 12, dans un dispositif d'éclairement comportant au moins deux moyens d'éclairement commandables séparément.

14. Utilisation selon la revendication 13, **caractérisée en ce qu'**au moins un moyen d'éclairement du dispositif d'éclairement sert à éclairer directement une pièce (1) et qu'au moins un autre moyen d'éclairement sert à éclairer de façon indirecte une pièce (1).

## Fig. 1

## Fig. 2

## Fig. 3a

Helligkeitsempfinden H

H=f(L)

Lichtstärke L

## Fig. 3b

Stellwert S ≙ log L

S=f(V)

Volume V = H

Fig. 4a

Änderung Volume:
$$dB=0 \; , \; dV \neq 0 \;\; \Rightarrow \;\; dS_1 = dS_2$$

Fig. 4b

Änderung Balance:
$$dV=0 \; , \; dB \neq 0 \;\; \Rightarrow \;\; dS_1 = -dS_2$$

EP 0 807 877 B2

Eingabe Nutzer
$dV_N$ , $dB_N$

Startwerte
$S_1$ , $S_2$

Fig. 5

(A) Parametrierung
$dV_N \rightarrow dV$
$dB_N \rightarrow dB$

(B) Berechnung
$dS_1$ , $dS_2$ , $S_1'$ , $S_2'$

(E) Setze
$dV = dV'$ , $dB = dB'$
$S_1 = S_1'$ , $S_2 = S_2'$

(C) $0 < S_1' < 255$
$\wedge$
$0 < S_2' < 255$ ?

nein

(D) Korrekturrechnung
$dV'$ , $dB'$

ja

Endwerte
$S_1'$ , $S_2'$